# EUROPÄISCHE PATENTSCHRIFT

(11) **EP 2 208 915 B1**
(45) Veröffentlichungstag und Bekanntmachung des Hinweises auf die Patenterteilung: **19.06.2013**
(21) Anmeldenummer: 09176432.4
(22) Anmeldetag: 19.11.2009
(51) Int. Cl.: F16H 57/04, F16H 55/22, F16H 55/17, F16H 55/06

(54) **Getriebeelement, Getriebe, Vorrichtung mit Getriebe sowie Verfahren zum Herstellen eines Getriebeelementes**
Gear element, gear, device with gear and method for producing a gear element
Elément d'engrenage, engrenage, dispositif doté d'un engrenage ainsi que procédé de fabrication d'un élément d'engrenage

(30) Priorität: 19.01.2009 DE 102009000297
(43) Veröffentlichungstag der Anmeldung: 21.07.2010
(73) Patentinhaber: Robert Bosch GmbH, 70469 Stuttgart (DE)
(72) Erfinder: Haussecker, Walter, 77830, Buehlertal (DE); Fiedler, Max, 70806, Kornwestheim (DE); Tasch, Franz, 76287, Rheinstetten (DE); Anding, Lars-Dirk, 72202, Nagold (DE)

(56) Entgegenhaltungen:
- EP-A1- 1 780 446
- JP-A- 2003 065 422
- JP-A- 2004 019 878
- JP-U- 50 107 856

## Beschreibung

### Stand der Technik

Die Erfindung betrifft ein Getriebeelement, vorzugsweise zum Einsatz in einem Schneckengetriebe, gemäß dem Oberbegriff des Anspruchs 1, ein Getriebe gemäß Anspruch 4, eine Vorrichtung, insbesondere einen Fensterheberantrieb, gemäß Anspruch 5 sowie ein Verfahren zum Herstellen eines Getriebeelementes gemäß dem Oberbegriff des Anspruchs 6.

Bei Verstellantrieben, insbesondere im Automotive-Bereich, nehmen die Anforderungen bezüglich des Getriebegleichlaufs, der Gewichtsminimierung, der Miniaturisierung und der Verschleißoptimierung zu. Besonders wichtig ist es, den Getriebelauf durch Optimierung der tribologischen Bedingungen im Eingriffsbereich zweier Getriebeelemente, also im Bereich der einander kraftbeaufschlagenden Wirkflächen der Getriebeelemente, zu verbessern. Problematisch bei bekannten Getrieben ist es, dass insbesondere unter Höchstlast nicht ausreichend Schmiermittel im Eingriffsbereich vorhanden ist, was zum einen den Getriebelauf verschlechtert und zum anderen zu erheblichen Verschleißerscheinungen führt. Ferner kommt es bei Mangelschmierung zu einer erhöhten Geräuschsemission.

Aus der EP 1 780 446 A1 ist bereits ein Getriebeelement nach dem Oberbegriff des Anspruchs 1 bekannt. Bei dem bekannten Getriebeelement sind an einer Wirkfläche eines Zahnes, der mit einem weiteren Getriebeelement zusammenwirkt, Schmiermitteldepots vorgesehen, die in Form von nutartigen Vertiefungen ausgebildet sind. Darüber hinaus ist es aus dem JP 2003 056422 A bekannt, eine Außenkante einer Getriebeschnecke mittels einer Kugelstrahl-Behandlung zu strukturieren, sodass deren schraubenförmige Außenkante aufgrund der Behandlung Vertiefungen aufweist.

### Offenbarung der Erfindung

Ausgehend von dem dargestellten Stand der Technik liegt der Erfindung die Aufgabe zugrunde, ein Getriebeelement nach dem Oberbegriff des Anspruchs 1 derart auszubilden, dass eine alternative Ausbildung bzw. Fertigung einer Außenkante einer Getriebeschnecke zur Ausbildung eines Schmiermitteldepots aufgezeigt wird. Die Aufgabe wird erfindungsgemäß bei einem Getriebeelement mit dem kennzeichnenden Merkmal des Anspruch 1 gelöst.

Vorteilhafte der Erfindung sind in den Unteransprüchen angegeben.

Besonders bevorzugt liegt das Einsatzgebiet der Erfindung bei allen hochdrehenden Schraubradverzahnungen, die hohe Gleichlaufanforderungen erfüllen müssen. Insbesondere eignet sich ein nach dem Konzept der Erfindung ausgebildetes Getriebeelement zum Einsatz in Fensterheberantrieben.

Besonders bevorzugt ist es weiterhin, wenn die Getriebeschnecke aus Metall ausgebildet ist.

Zusätzlich zur Strukturierung der schraubenförmigen Außenkante ist es möglich, die Wirkfläche, also die Schneckenflanke, chemisch oder mechanisch, beispielsweise durch Prägen, Rollieren, Fräsen, etc. zu strukturieren. Auch ist es möglich, eine bereits strukturierte Oberfläche der Schnecke im Spritzgussverfahren zu erhalten, wenn die Schnecke als Spritzgussteil ausgebildet wird.

Es ist möglich, die Wirkfläche des Getriebeelementes entweder aus Metall oder Kunststoff auszubilden. Dabei ist es besonders bevorzugt, wenn das gesamte Getriebeelement aus einem einheitlichen Material beschaffen ist, wobei auch Hybrid-Ausführungen realisierbar sind.

Die Erfindung führt auch auf ein Getriebe, insbesondere für Kraftfahrzeuganwendungen, vorzugsweise für Fensterheberantriebe. Das Getriebe zeichnet sich durch mindestens ein nach dem Konzept der Erfindung ausgebildetes Getriebeelement aus. Ganz besonders bevorzugt umfasst das Getriebe mindestens zwei derartige Getriebeelemente, wobei es noch weiter bevorzugt ist, wenn diese Getriebeelemente unmittelbar kraftübertragend ineinander eingreifen.

Darüber hinaus führt die Erfindung auf eine Vorrichtung, insbesondere einen Verstellantrieb, insbesondere für Kraftfahrzeuganwendungen. Ganz besonders bevorzugt handelt es sich um einen Fensterheberantrieb. Die Vorrichtung zeichnet sich durch das Vorhandensein mindestens eines wie zuvor beschrieben ausgebildeten Getriebes aus.

Des Weiteren führt die Erfindung auf ein Verfahren zum Herstellen eines zuvor beschriebenen Getriebeelementes, insbesondere für den Einsatz in Getrieben von Verstellantrieben. Das erfindungsgemäße Verfahren zeichnet sich dadurch aus, dass an einer strukturierten, schraubenförmigen Außenkante einer Getriebeschnecke ein Schmiermitteldepot die Strukturierung in Form einer gewellten Strukturierung ausgebildet wird. Im Falle der Ausbildung des Getriebeelementes als Kunststoffspritzgussteil kann das Schmiermitteldepot beispielsweise durch eine entsprechende Ausformung des Spritzgusswerkzeugs unmittelbar beim Spritzgussvorgang eingeformt werden, oder alternativ danach, beispielsweise durch mechanische und/oder chemische Bearbeitung und/oder Abflammen.

Weitere Vorteile, Merkmale und Einzelheiten der Erfindung ergeben sich aus der nachfolgenden Beschreibung bevorzugter Ausführungsbeispiele sowie anhand der Zeichnungen.

### Diese zeigen in:

- Fig. 1: einen Ausschnitt eines als Kunststoffspritzgussteil ausgebildeten Getriebeelementes,
- Fig. 2: einen Ausschnitt eines alternativ ausgebildeten Getriebeelementes,
- Fig. 3a: einen Ausschnitt einer weiteren alternativen Ausführungsform eines Getriebeelementes,
- Fig.3b: eine teilgeschnittene Ansicht des Getriebeelementes gemäß Fig. 3a, und
- Fig. 4: einen Ausschnitt einer weiteren alternativen Ausführungsform eines Getriebeelementes.

In den Figuren sind gleiche Elemente und Elemente mit der gleichen Funktion mit den gleichen Bezugszeichen gekennzeichnet.

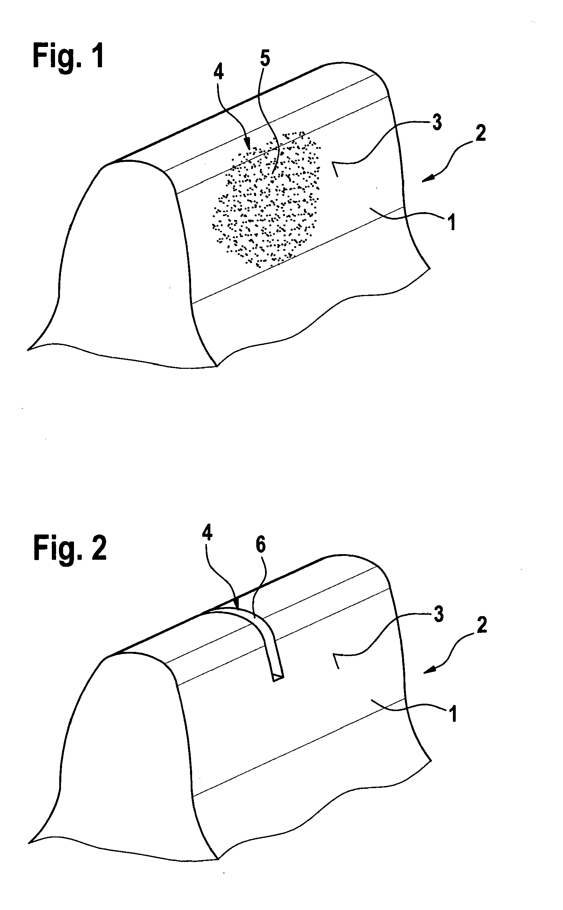

In Fig. 1 ist ein Zahn 1 eines ansonsten nicht weiter dargestellten, als Zahnrad ausgebildeten Getriebeelementes 2 gezeigt. Der Zahn 1 weist auf zwei voneinander abgewandten, jeweils in eine Umfangsrichtung weisenden Seiten eine Wirkfläche 3 auf, die den Eingriffsbereich des Getriebeelementes 2 mit einem weiteren, nicht dargestellten, beispielsweise als Zahnrad oder Getriebeschnecke ausgebildeten Getriebeelementes 2 bildet. Die Wirkfläche 3 ist derart strukturiert, dass ein Schmiermitteldepot 4 gebildet ist. Das Schmiermitteldepot 4 besteht dabei aus einer Vielzahl von Vertiefungen 5 in der Wirkfläche 3 (Oberfläche) des Getriebeelementes 2. In den Vertiefungen 5 kann ein nicht dargestelltes Schmiermittel (insbesondere Fett) unmittelbar im bzw. benachbart zum Eingriffsbereich des Getriebeelementes 2 gespeichert werden, wodurch zu jedem Betriebszeitpunkt eines mit einem derartigen Getriebeelement 2 ausgestatteten Getriebes ausreichend Schmiermittel zur Verfügung steht, wodurch der Flankenberührungsbereich mit einem stabilen Schmierfilm versehen ist. Dies führt zu einem verbesserten Getriebegleichlauf, insbesondere bei Fensterhebermotoren, sowie zu einem verbesserten Getriebe-Laufverhalten, insbesondere bei Neuantrieben nach der Fertigung.

Im Hinblick auf die Einbringung der Vertiefungen 5 bzw. Ausbildung des Schmiermitteldepots 4 gibt es unterschiedliche Möglichkeiten. So kann die Wirkfläche 3 beispielsweise chemisch, insbesondere durch Ätzen, bearbeitet werden. Auch ist es möglich, diese abzuflammen. Ferner kann eine mechanische Bearbeitung, beispielsweise durch Bürsten, Strahlen, Prägen, Fräsen, etc. erfolgen. Wesentlich ist es, dass unmittelbar im Bereich der Wirkfläche 3 ein Schmiermitteldepot zum Speichern von Schmiermittel, insbesondere Fett, ausgebildet wird.

In Fig. 2 ist ebenfalls ein Zahn 1 eines ansonsten nicht näher dargestellten Getriebeelementes 2 gezeigt. Dieser umfasst ein als Spalt 6 ausgebildetes Schmiermitteldepot 4. Der Spalt 6 erstreckt sich in Umfangsrichtung, wobei der Spalt 6 in radialer Richtung nach außen, sowie in beide Umfangsrichtungen offen ist, also bis an die voneinander abgewandten Wirkflächen 3 des Zahns1 reicht. Der Spalt 6 bildet eine rillenförmige Aussparung am Zahnkopf und kann entweder im Spritzprozess unmittelbar hergestellt werden, für den Fall, dass das Getriebeelement 2 als Kunststoffspritzgussteil ausgebildet ist. Alternativ ist es möglich, den Spalt 6 durch Fräsen oder Schneiden nach einem Spritzgussvorgang einzubringen. Auch kann der Spalt 6 durch Fräsen oder Schneiden im Nachhinein eingebracht werden, wenn es sich bei dem Getriebeelement 2 um ein Metallteil handelt. Schmiermittel, das aus dem Zahneingriffsbereich, also von der Wirkfläche 3, im Betrieb verdrängt wird, haftet am und in dem Spalt 6 an und bleibt somit dem tribologischen System erhalten, wodurch verbesserte Getriebelaufeigenschaften und ein minimierter Verschleiß erzielt werden. Der Spalt 6 sollte, wie gezeigt, im Bereich des tatsächlichen Flankeneingriffs liegen bzw. bis dorthin reichen.

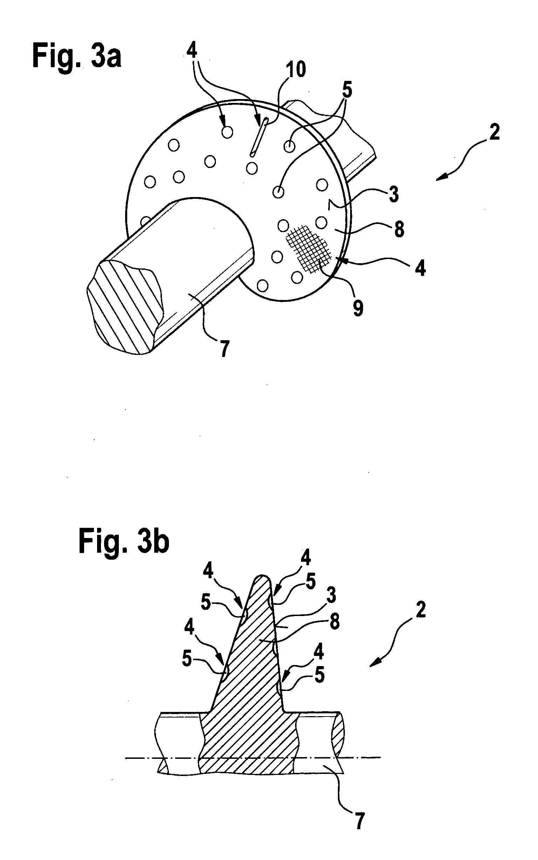

Fig. 3a zeigt ausschnittsweise ein als Getriebeschnecke ausgebildetes Getriebeelement 2. Diese besteht im Wesentlichen aus einem zentrischen Schaftabschnitt 7 und einem schnecken- bzw. schraubenförmigen Flankenabschnitt 8, wobei Schaftabschnitt 7 und Flankenabschnitt 8 aus einem Bauteil oder aus unterschiedlichen, aneinander festgelegten Bauteilen bestehen können. Der Flankenabschnitt 8 weist eine Wirkfläche 3 zum Zusammenwirken mit einem nicht dargestellten, als Schneckenrad ausgebildeten Getriebeelement auf. Zu erkennen ist, dass die Wirkfläche 3 derart strukturiert ist, dass in die Wirkfläche 3 ein Schmiermitteldepot 4 in der Art einer Golfballoberfläche eingebracht ist. Fig. 3a zeigt beispielhaft mehrere unterschiedliche Möglichkeiten zur Ausbildung eines derartigen Schmiermittels, beispielsweise in Form von netzartigen Rillen 9, die beispielsweise durch Bürsten hergestellt sind. Auch ist es möglich, golfballähnliche Vertiefungen 5, beispielsweise durch Prägen, auszubilden und/oder Schlitze 10. Die in Fig. 3a dargestellten Ausführungsformen sind dabei nicht als abschließend zu verstehen. Besonders vorteilhaft bei der gezeigten Ausführungsform ist, dass das Schmiermitteldepot 4 am härteren Verzahnungspartner, hier der metallischen Getriebeschnecke, vorgesehen ist, der mit dem weicheren Verzahnungspartner, hier einem nicht gezeigten Kunststoff-Spritzgussschneckenrad, kämmt.

Fig. 3b zeigt eine teilgeschnittene Ansicht des Getriebeelementes 2, wobei der Flankenabschnitt 8 aufgebrochen dargestellt ist. Zu erkennen sind golfballähnliche Vertiefungen 5 in den Wirkflächen 3, wobei die Vertiefungen 5 in ihrer Gesamtheit ein Schmiermitteldepot 4 zum Speichern von Schmiermittel bilden. Zusätzlich erzeugt die golfballähnliche Fläche Vibrationen, die den Schmierfilmaufbau fördern.

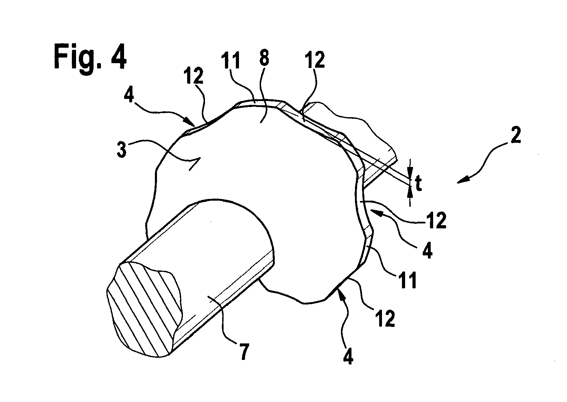

Fig. 4 zeigt eine alternative Ausführungsform eines als Getriebeschnecke ausgebildeten Getriebeelementes 2, umfassend einen Schaftabschnitt 7 und einen einteilig damit ausgebildeten, schneckenförmigen Flankenabschnitt 8, welcher wiederum Wirkflächen 3 aufweist. Am Rand der Wirkfläche 3, genauer an der schraubenförmig verlaufenden Außenkante 11 des Flankenabschnitts 8 des Getriebeelementes 2 ist ein Schmiermitteldepot 4 ausgebildet. Hierzu ist die Außenkante 11, regelmäßig oder unregelmäßig, gewellt ausgeformt, so dass Wellentäler 12 mit einer Tiefe t entstehen, wobei sich in den Wellentälern 12 Schmiermittel halten kann und auf diese Weise für eine mittelbare Schmierung der Wirkflächen 3 zur Verfügung steht. Die Wellung erzeugt Vibrationen, die den Aufbau des Schmierfilms zudem stabilisieren.

Bevorzugt ist das als Getriebeschnecke ausgebildete Getriebeelement 2 gemäß Fig. 4 aus Metall ausgebildet, kann jedoch alternativ auch aus Kunststoff ausgebildet werden oder als Metall-Kunststoffhybrid, wobei beispielsweise ein metallischer Schaftabschnitt 7 von einem Kunststoff-Flankenabschnitt 8 umspritzt sein kann, oder der Flankenabschnitt 8 auf sonstige Weise mit dem Schaftabschnitt 7 verbunden werden kann.

## Patentansprüche

1. Getriebeelement mit einer Wirkfläche (3) zum kraftübertragenden Zusammenwirken mit einem weiteren Getriebeelement (2), wobei ein Schmiermitteldepot (4) vorgesehen ist, wobei das Getriebeelement (2) eine Getriebeschnecke ist, und wobei eine schraubenförmige Außenkante (11) der Getriebeschnecke strukturiert ist,
**dadurch gekennzeichnet,**
**dass** die Strukturierung eine gewellte Strukturierung ist.

2. Getriebeelement nach Anspruch 1,
**dadurch gekennzeichnet,**
**dass** die Wirkfläche (3) des Getriebeelementes (2) aus Metall oder Kunststoff ausgebildet ist.

3. Getriebeelement nach Anspruch 1 oder 2,
**dadurch gekennzeichnet,**
**dass** das Schmiermitteldepot (4) mechanisch, insbesondere durch Bürsten und/oder Sandstrahlen und/oder chemisch, insbesondere durch Ätzen und/oder Aufbringen eines Coatings, und/oder durch Abflammen hergestellt ist.

4. Getriebe, insbesondere für Kraftfahrzeuganwendungen, vorzugsweise Fensterhebergetriebe, mit mindestens einem Getriebeelement (2) nach einem der vorhergehenden Ansprüche.

5. Vorrichtung, vorzugsweise Verstellantrieb, insbesondere Fensterheberantrieb, mit einem Getriebe nach Anspruch 4.

6. Verfahren zum Herstellen eines Getriebeelementes (2) nach einem der Ansprüche 1 bis 3,
**dadurch gekennzeichnet,**
**dass** an dem Getriebeelement (2) ein Schmiermitteldepot (4) vorgesehen wird.

7. Verfahren nach Anspruch 6,
**dadurch gekennzeichnet,**
**dass** das Getriebeelement (2) insbesondere als Spritzgussteil hergestellt wird, und dass nach dem Herstellen, insbesondere Spritzgießen, das Schmiermitteldepot (4), insbesondere mechanisch und/oder chemisch, eingebracht und/oder aufgebracht wird, oder dass das Schmiermitteldepot (4) durch einen Spritzgussprozess eingeformt wird.

## Claims

1. Gear-mechanism element having an active face (3) for force-transmitting interaction with a further gear-mechanism element (2), a lubricant store (4) being provided, the gear-mechanism element (2) being a gear worm, and a helical outer edge (11) of the gear worm being structured, **characterized in that** the structuring is an undulating structuring.

2. Gear-mechanism element according to Claim 1, **characterized in that** the active face (3) of the gear-mechanism element (2) is formed from metal or plastic.

3. Gear-mechanism element according to Claim 1 or 2, **characterized in that** the lubricant store (4) is produced mechanically, in particular by scrubbing and/or sandblasting, and/or chemically, in particular by etching and/or application of a coating, and/or by flame treatment.

4. Gear mechanism, in particular for motor-vehicle applications, preferably window-lifter gear mechanism, having at least one gear-mechanism element (2) according to one of the preceding claims.

5. Apparatus, preferably adjusting drive, in particular window-lifter drive, having a gear mechanism according to Claim 4.

6. Method for producing a gear-mechanism element (2) according to one of Claims 1 to 3, **characterized in that** a lubricant store (4) is provided on the gear-mechanism element (2).

7. Method according to Claim 6, **characterized in that** the gear-mechanism element (2) is produced, in particular, as an injection-moulded part, and **in that**, after the production, in particular injection-moulding, the lubricant store (4) is introduced and/or applied, in particular mechanically and/or chemically, or **in that** the lubricant store (4) is formed by an injection-moulding process.

## Revendications

1. Élément d'engrenage comprenant une surface fonctionnelle (3) destiné à coopérer par transmission de force avec un autre élément d'engrenage (2), un dépôt de lubrifiant (4) étant prévu, l'élément d'engrenage (2) étant une vis sans fin d'engrenage et une arête extérieure (11) de forme hélicoïdale de la vis sans fin d'engrenage étant structurée,
**caractérisé en ce que**
la structuration est une structuration ondulée.

2. Élément d'engrenage selon la revendication 1,
**caractérisé en ce que**
la surface fonctionnelle (3) de l'élément d'engrenage (2) est réalisée en métal ou en plastique.

3. Élément d'engrenage selon la revendication 1 ou 2,
**caractérisé en ce que**
le dépôt de lubrifiant (4) est fabriqué mécaniquement, notamment par brossage et/ou sablage et/ou chimiquement, notamment par gravure chimique et/ou application d'un revêtement, et/ou par flambage.

4. Engrenage, notamment pour des applications dans des véhicules automobiles, de préférence engrenage pour lève-glace, comprenant au moins un élément d'engrenage (2) selon l'une quelconque des revendications précédentes.

5. Dispositif, de préférence entraînement de réglage, en particulier entraînement de lève-glace, comprenant un engrenage selon la revendication 4.

6. Procédé de fabrication d'un élément d'engrenage (2) selon l'une quelconque des revendications 1 à 3,
**caractérisé en ce**
**qu'**un dépôt de lubrifiant (4) est prévu sur l'élément d'engrenage (2).

7. Procédé selon la revendication 6,
**caractérisé en ce que**
l'élément d'engrenage (2) est fabriqué notamment sous forme de pièce moulée par injection et **en ce qu'**après la fabrication, notamment le moulage par injection, le dépôt de lubrifiant (4) est introduit et/ou appliqué en particulier mécaniquement et/ou chimiquement, ou **en ce que** le dépôt de lubrifiant (4) est façonné par un processus de moulage par injection.
